# EUROPEAN PATENT SPECIFICATION

(11) **EP 3 597 726 B1**
(45) Date of publication and mention of the grant of the patent: **10.03.2021**
(21) Application number: 19187130.0
(22) Date of filing: 18.07.2019
(51) Int. Cl.: C10L 1/22, C10L 10/18

(54) **FUEL-SOLUBLE SYNERGISTIC CLEANING MIXTURE FOR HIGH PRESSURE GASOLINE ENGINES**
KRAFTSTOFFLÖSLICHES SYNERGISTISCHES REINIGUNGSGEMISCH FÜR HOCHDRUCKBENZINMOTOREN
MÉLANGE DE NETTOYAGE SYNERGIQUE SOLUBLE DANS DU CARBURANT POUR MOTEURS À ESSENCE À HAUTE PRESSION

(30) Priority: 20.07.2018 US 201816041176
(43) Date of publication of application: 22.01.2020
(73) Proprietor: Afton Chemical Corporation, Richmond, Virginia 23219 (US)
(72) Inventor: SHANAHAN, Charles, Richmond, VA Virginia 23220 (US); NUCKOLS, Michel, Midlothian, VA Virginia 23114 (US)
(74) Representative: BRP Renaud & Partner mbB Rechtsanwälte Patentanwälte Steuerberater

(56) References cited:
- EP-A1- 1 518 918
- EP-A1- 2 910 625
- CN-A- 101 671 584

## Description

### FIELD

The present disclosure relates to methods for reducing fuel injector deposits in gasoline engines operating at high fuel pressures. More particularly, the disclosure relates to methods of cleaning up fuel injectors operating at high fuel pressures by combusting a gasoline composition including a synergistic combination of a fuel-soluble cleaning mixture.

### BACKGROUND

Over the years considerable work has been devoted to additives for controlling (preventing or reducing) deposit formation in the fuel induction systems of gasoline internal combustion engines. In particular, additives that can effectively control fuel injector deposits, intake valve deposits, and combustion chamber deposits represent the focal point of considerable research activities in the field. However, prior fuel additives are often less effective when used in newer engine technology.

Newer engine technology, for instance, includes systems that supply fuel at dramatically increased fuel pressure and, because of this high fuel pressure, new engine technology presents challenges not found in prior engine technology running at substantially lower fuel pressures. For example, prior carbureted engines typically operated at a fuel pressure of 4 to 15 psi and prior multi-port fuel injected engines are designed to operate at 30 to 60 psi. Newer engine technology, on the other hand, is being developed for non-idle operation at greater than 500 psi fuel pressure. In view of this difference, there are a number of technical issues to be resolved with this new engine technology, and one of them is injector performance and cleanliness when operated at such dramatically higher fuel pressures.

Unfortunately, conventional fuel additives often found effective when combusted in gasoline engines operating at lower fuel pressures do not necessarily translate to the same performance when combusted in gasoline engines that are operated at fuel pressures 15 to even 100 times higher. For instance, fuel additives, such as hydrocarbyl substituted succinimides, often used as detergents in fuel for keeping injectors clean when operated at low pressures, do not provide the same level of injector performance when operated in gasoline engines at high fuel pressures. In particular, these conventional additives are not effective to provide clean-up performance of already fouled injectors when the engine is operated at the high fuel pressures of newer engine technology EP1518918 discloses additive mixtures of imidazole as deposit inhibitor and a Mannich detergent for high-pressure gasoline inlets.

### BRIEF DESCRIPTION OF THE FIGURES

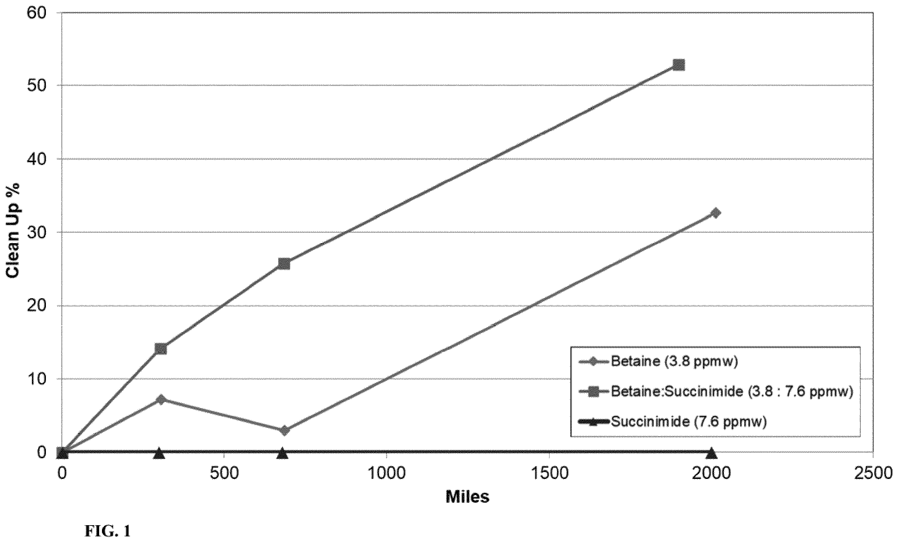

FIG. 1 is a graph showing the clean-up performance of fuel injector cleaning mixtures of the present disclosure when combusted in a gasoline engine operated at high fuel pressures.

### SUMMARY

In one approach or embodiment, a method is provided that reduces fuel injector deposits in a high pressure gasoline engine. The method includes injecting a fuel composition at a pressure (such as a non-idle pressure) of about 500 to about 7,500 psi to a gasoline engine and combusting the fuel composition in the gasoline engine. The fuel composition includes a major amount of gasoline and a minor amount of a fuel injector cleaning mixture. The fuel injector cleaning mixture includes a first additive of Formula I and a second additive of Formula II 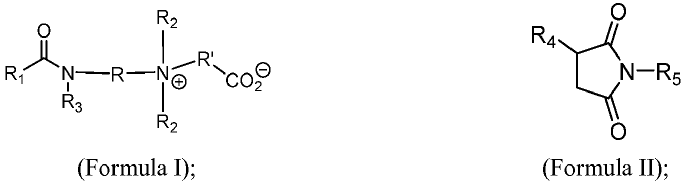 wherein R and R' are independently alkylene linkers having 1 to 10 carbon atoms (in other approaches, 1 to 3 carbon atoms); R₁ is a hydrocarbyl group or optionally substituted hydrocarbyl group, or an aryl group or optionally substituted aryl group; R₂ is independently a linear or branched C1 to C4 alkyl group; R₃ is hydrogen or a C1 to C4 alkyl group; R₄ is a hydrocarbyl group (such as a polyisobutylene and the like as discussed more below); R₅ is hydrogen, an alkyl group, an aryl group, -OH, -NHR₆, a polyamine, or an alkyl group containing one or more primary, secondary, or tertiary amino groups and wherein R₆ is a hydrogen or an alkyl group wherein a ratio of the additive of Formula I to the additive of Formula II is 1:8 to 8:1 and wherein the fuel composition includes 1.5 to 100 ppmw of the additive of Formula I and 3 to 800 ppmw of the additive of Formula II.

In other approaches or embodiments, the method of the previous paragraph may also include one or more further features in any combination selected from the following: wherein the fuel composition includes no more than about 600 ppmw of the fuel injector cleaning mixture; and/or wherein the fuel composition further includes about 45 to about 1000 ppmw of a separate intake valve deposit (IVD) control additive selected from a Mannich detergent, polyetheramine detergent, hydrocarbyl amine detergent, and combinations thereof; and/or wherein the fuel composition further includes at least one additive selected from the group consisting of antioxidants, carrier fluids, metal deactivators, dyes, markers, corrosion inhibitors, biocides, antistatic additives, drag reducing agents, demulsifiers, emulsifiers, dehazers, anti-icing additives, antiknock additives, anti-valve-seat recession additives, lubricity additives, surfactants and combustion improvers; and/or wherein the fuel injector cleaning mixture achieves about 30 to about 100 percent clean-up of fuel injector deposits in the gasoline engine when supplied at pressures (such as non-idle pressures) of about 500 psi to about 7,500 psi and when the clean-up of injector deposits is measured by at least one of long-term fuel trim, injector pulse width, injection duration, injector flow, and combinations thereof; and/or wherein R and R' are independently alkylene linkers having 1 to 3 carbon atoms and R₁ is a C8 to C20 hydrocarbyl group; and/or wherein R' is a methylene linker; and/or wherein R₂ is a methyl group; and/or wherein the additive of Formula II includes a hydrocarbyl substituted succinimide derived from ethylene diamine, diethyelene triamine, triethylene tetraamine, tetraethylene pentamine, pentaethylene hexamine, N,N'-(iminodi-2,1,ethanediyl)bis-1,3-propanediamine and combinations thereof; and/or wherein R₄ in the compound of Formula II is a hydrocarbyl group having a number average molecular weight from about 450 to about 3000 as measured by GPC using polystyrene as reference and R₅ is derived from tetraethylene pentamine and derivatives thereof; and/or wherein the fuel composition is provided at a pressure of about 1,000 to about 4,000 psi; and/or wherein R₁ is oleyl derived and wherein R₅ is derived from ethylene diamine, diethyelene triamine, triethylene tetraamine, tetraethylene pentamine, pentaethylene hexamine, N-N'-(iminodi-2,1,ethanediyl)bis-1,3-propanediamine, and combinations thereof; and/or wherein R and R' are independently alkylene linkers having 1 to 3 carbon atoms, R₁ is a C8 to C20 hydrocarbyl group, and wherein R₄ in the compound of Formula II is a hydrocarbyl group having a number average molecular weight from about 450 to about 3000 as measured by GCP using polystyrene as a reference and R₅ is derived from ethylene diamine, diethyelene triamine, triethylene tetraamine, tetraethylene pentamine, pentaethylene hexamine, N-N'-(iminodi-2,1,ethanediyl)bis-1,3-propanediamine, and combinations thereof; and/or wherein R' includes a methylene linker; and/or wherein R₂ is a methyl group.

### DETAILED DESCRIPTION

The present disclosure describes methods of reducing deposits on fuel injectors in a gasoline engine operated at high fuel pressures using a fuel soluble cleaning mixture. In one approach or embodiment, the fuel soluble cleaning mixture includes a synergistic combination of a first cleaning additive of a quaternary ammonium internal salt combined with a second cleaning additive of a hydrocarbyl substituted dicarboxylic anhydride derivative. Low treat rates of this synergistic combination of cleaning additives reduce fuel injector deposits and/or clean-up fouled fuel injectors in a gasoline engine when that engine is operated at high fuel pressures (such as non-idle fuel pressures) greater than about 500 psi (in some approaches, about 500 to about 7,500 psi), and in yet further approaches greater than about 1,000 psi (in other approaches, about 1,000 to about 7,500 psi). It was unexpectedly discovered that the combination of the two cleaning additives together enables a substantially greater level of injector clean-up performance (and in some approaches at lower treat rates) than either cleaning additive can achieve individually when used in a gasoline fuel at such high fuel pressures.

The First Cleaning Additive: The first cleaning additive of the synergistic mixture, in one approach, is a quaternary ammonium internal salt obtained from amines or polyamines that is substantially devoid of any free anion species. For example, such additive may be made by reacting a tertiary amine of Formula III 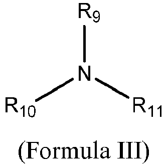 wherein each of R₉, R₁₀, and R₁₁ is selected from hydrocarbyl groups containing from 1 to 200 carbon atoms, with a halogen substituted C2-C8 carboxylic acid, ester, amide, or salt thereof. What is generally to be avoided in the reaction is quaternizing agents selected from the group consisting of hydrocarbyl substituted carboxylates, carbonates, cyclic-carbonates, phenates, epoxides, or mixtures thereof. In one embodiment, the halogen substituted C2-C8 carboxylic acid, ester, amide, or salt thereof may be selected from chloro-, bromo-, fluoro-, and iodo-C2-C8 carboxylic acids, esters, amides, and salts thereof. The salts may be alkali or alkaline earth metal salts selected from sodium, potassium, lithium calcium, and magnesium salts. A particularly useful halogen substituted compound for use in the reaction is the sodium or potassium salt of a chloroacetic acid.

As used herein the term "substantially devoid of free anion species" means that the anions, for the most part are covalently bound to the product such that the reaction product as made does not contain any substantial amounts of free anions or anions that are ionically bound to the product. In one embodiment, "substantially devoid" means from 0 to less than about 2 wt. % of free anion species.

In another approach or embodiment, a tertiary amine including monoamines and polyamines may be reacted with the halogen substituted acetic acid or derivative thereof to provide the first detergent additive of the synergistic mixture. Suitable tertiary amine compounds are those of Formula IV 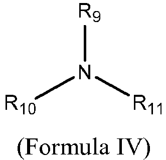 wherein each of R₉, R₁₀, and R₁₁ is selected, as noted above, from hydrocarbyl groups containing from 1 to 200 carbon atoms. Each hydrocarbyl group R₉ to R₁₁ may independently be linear, branched, substituted, cyclic, saturated, unsaturated, or contain one or more hetero atoms. Suitable hydrocarbyl groups may include, but are not limited to alkyl groups, aryl groups, alkylaryl groups, arylalkyl groups, alkoxy groups, aryloxy groups, amido groups, ester groups, imido groups, and the like. Any of the foregoing hydrocarbyl groups may also contain hetero atoms, such as oxygen or nitrogen atoms. Particularly suitable hydrocarbyl groups may be linear or branched alkyl groups. Some representative examples of amine reactants which can be reacted to yield compounds of this disclosure include, but are not limited to, trimethyl amine, triethyl amine, tri-n-propyl amine, dimethylethyl amine, dimethyl lauryl amine, dimethyl oleyl amine, dimethyl stearyl amine, dimethyl eicosyl amine, dimethyl octadecyl amine, N-methyl piperidine, N,N'-dimethyl piperazine, N-methyl-N-ethyl piperazine, N-methyl morpholine, N-ethyl morpholine, N-hydroxyethyl morpholine, pyridine, triethanol amine, triisopropanol amine, methyl diethanol amine, dimethyl ethanol amine, lauryl diisopropanol amine, stearyl diethanol amine, dioleyl ethanol amine, dimethyl isobutanol amine, methyl diisooctanol amine, dimethyl propenyl amine, dimethyl butenyl amine, dimethyl octenyl amine, ethyl didodecenyl amine, dibutyl eicosenyl amine, triethylene diamine, hexa- methylenetetramine, N,N,N',N'-tetramethylethylenediamine, N,N,N',N'-tetramethyl-propylenediamine, N,N,N',N'-tetraethyl-1,3-propanediamine, methyldi-cyclohexyl amine, 2,6-dimethylpyridine, dimethylcylohexylamine, C10-C30-alkyl or alkenyl-substituted amidopropyldimethylamine, C12-C200-alkyl or alkenyl-substituted succinic-carbonyl-dimethylamine, and the like. A suitable first cleaning additive may be the internal salts of oleyl amidopropyl dimethylamino or oleyl dimethyl amine.

If the amine contains solely primary or secondary amino groups, it may be necessary to alkylate at least one of the primary or secondary amino groups to a tertiary amino group prior to the reaction with the halogen substituted C2-C8 carboxylic acid, ester, amide, or salt thereof. In one embodiment, alkylation of primary amines and secondary amines or mixtures with tertiary amines may be exhaustively or partially alkylated to a tertiary amine. It may also be necessary to properly account for the hydrogens on the nitrogen and provide base or acid as required (e.g., alkylation up to the tertiary amine requires removal (neutralization) of the hydrogen (proton) from the product of the alkylation). If alkylating agents, such as, alkyl halides or dialkyl sulfates are used, the product of alkylation of a primary or secondary amine is a protonated salt and needs a source of base to free the amine for further reaction.

The halogen substituted C2-C8 carboxylic acid, ester, amide, or salt thereof for use in making the first cleaning additive may be derived from a mono-, di-, or tri- chloro- bromo-, fluoro-, or iodo-carboxylic acid, ester, amide, or salt thereof selected from the group consisting of halogen-substituted acetic acid, propanoic acid, butanoic acid, isopropanoic acid, isobutanoic acid, tert-butanoic acid, pentanoic acid, heptanoic acid, octanoic acid, halo-methyl benzoic acid, and isomers, esters, amides, and salts thereof. The salts of the carboxylic acids may include the alkali or alkaline earth metal salts, or ammonium salts including, but not limited to the Na, Li, K, Ca, Mg, triethyl ammonium and triethanol ammonium salts of the halogen-substituted carboxylic acids. A particularly suitable halogen substituted carboxylic acid, or salt thereof may be selected from chloroacetic acid and sodium or potassium chloroacetate. The amount of halogen substituted C2-C8 carboxylic acid, ester, amide, or salt thereof relative to the amount of tertiary amine reactant may range from a molar ratio of about 1:0.1 to about 0.1:1.0.

The internal salts made according to the foregoing procedure may include, but are not limited to (1) hydrocarbyl substituted compounds of the formula R"-NMe₂CH₂COO where R" is from C1 to C30 or a substituted amido group; (2) fatty amide substituted internal salts; and (3) hydrocarbyl substituted imide, amide, or ester internal salts wherein the hydrocarbyl group has 8 to 40 carbon atoms. Particularly suitable internal salts may be selected from the group consisting of polyisobutenyl substituted succinimide, succinic diamide, and succinic diester internal salts; C8-C40 alkenyl substituted succinimide, succinic diamide, and succinic diester internal salts; oleyl amidopropyl dimethylamino internal salts; and oleyl dimethylamino internal salts.

In yet another approach or embodiment, the first fuel injector cleaning additive of the synergistic mixture may be a quaternary ammonium internal salt of Formula I 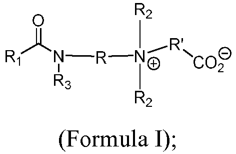 wherein R and R' are independently alkylene linkers having 1 to 10 carbon atoms (in other approaches 1 to 3 carbon atoms); R₁ is independently a hydrocarbyl group or optionally substituted hydrocarbyl group, or an aryl group or optionally substituted aryl group; R₂ is independently a linear or branched C1 to C4 alkyl group; R₃ is a hydrogen atom or a C1 to C4 alkyl group. The internal salts of Formula I may also be substantially devoid of free anion species as discussed above.

In another approach, the first fuel injector cleaning additive includes the compound of Formula I above wherein R is a propylene linker, R' is a methylene linker, R₁ is a C8 to C20 hydrocarbyl group, and R₂ is a methyl group. In yet other approaches, the first fuel injector cleaning additive is selected from oleyl amidopropyl dimethylamine internal salts or oleyl dimethylamino internal salts. In some approaches, such fuel injector cleaning additives may be substantially devoid of free anion species.

While the first fuel injector cleaning additive may provide limited reduction of fuel injector deposits and/or clean-up performance of injector deposits in engines operating at high pressures by itself, as discussed more below, it was unexpectedly discovered that when the first fuel injector cleaning additive is combined with other fuel injector cleaning additives, a dramatically improved clean-up performance of engines is achieved when those engines are operated at high pressure.

The Second Cleaning Additive: The second cleaning additive of the synergistic mixture, in one approach, is a hydrocarbyl substituted dicarboxylic anhydride derivative. In some approaches, the second cleaning additive includes hydrocarbyl succinimides, succinamides, succinimide-amides and succinimide-esters. These nitrogen-containing derivatives of hydrocarbyl succinic acylating agents may be prepared by reacting a hydrocarbyl-substituted succinic acylating agent with an amine, polyamine, or alkyl amine having one or more primary, secondary, or tertiary amino groups.

In one approach or embodiment, the hydrocarbyl substituted dicarboxylic anhydride derivative may include a hydrocarbyl substituent having a number average molecular weight ranging from about 450 to about 3000 as measured by GPC using polystyrene as reference. The derivative may be selected from a diamide, acid/amide, acid/ester, diacid, amide/ester, diester, and imide. Such derivative may be made from reacting a hydrocarbyl substituted dicarboxylic anhydride with ammonia, a polyamine, or an alkyl amine having one or more primary, secondary, or tertiary amino groups. In some embodiments, the polyamine or alkyl amine may be tetraethylene pentamine (TEPA), triethylenetetramine (TETA), and the like amines. In other approaches, the polyamine or alkyl amine may have the formula H₂N-((CHR₁₂-(CH₂)_{q}-NH)ᵣ-H, wherein R₁₂ is hydrogen or an alkyl group having from 1 to 4 carbon atoms, q is an integer of from 1 to 4 and r is an integer of from 1 to 6, and mixtures thereof. In other approaches, a molar ratio of the hydrocarbyl substituted dicarboxylic anhydride reacted with the ammonia, polyamine, or alkyl amine may be from about 0.5:1 to about 2:1, in other approaches about 1:1 to about 2:1.

In other approaches, the hydrocarbyl substituted dicarboxylic anhydride may be a hydrocarbyl carbonyl compound of the Formula V 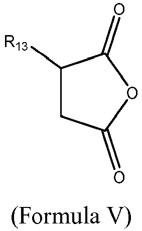 wherein R₁₃ is a hydrocarbyl group derived from a polyolefin. In some aspects, the hydrocarbyl carbonyl compound may be a polyalkylene succinic anhydride reactant wherein R₁₃ is a hydrocarbyl moiety, such as for example, a polyalkenyl radical having a number average molecular weight of from about 450 to about 3000 as measured by GPC using polystyrene as reference. For example, the number average molecular weight of R₁₃ may range from about 600 to about 2500, or from about 700 to about 1500, as measured by GPC using polystyrene as reference. A particularly useful R₁₃ has a number average molecular weight of about 950 to about 1000 Daltons (as measured by GPC using polystyrene as reference) and comprises polyisobutylene. Unless indicated otherwise, molecular weights in the present specification are number average molecular weights as measured by GPC using polystyrene as reference.

The R₁₃ hydrocarbyl moiety may include one or more polymer units chosen from linear or branched alkenyl units. In some aspects, the alkenyl units may have from about 2 to about 10 carbon atoms. For example, the polyalkenyl radical may comprise one or more linear or branched polymer units chosen from ethylene radicals, propylene radicals, butylene radicals, pentene radicals, hexene radicals, octene radicals and decene radicals. In some aspects, the R₁₃ polyalkenyl radical may be in the form of, for example, a homopolymer, copolymer or terpolymer. In one aspect, the polyalkenyl radical is isobutylene. For example, the polyalkenyl radical may be a homopolymer of polyisobutylene comprising from about 10 to about 60 isobutylene groups, such as from about 20 to about 30 isobutylene groups. The polyalkenyl compounds used to form the R₁₃ polyalkenyl radicals may be formed by any suitable methods, such as by conventional catalytic oligomerization of alkenes.

In some aspects, high reactivity polyisobutenes having relatively high proportions of polymer molecules with a terminal vinylidene group may be used to form the R₁₃ group. In one example, at least about 60%, such as about 70% to about 90%, of the polyisobutenes comprise terminal olefinic double bonds. High reactivity polyisobutenes are disclosed, for example, in US 4,152,499, the disclosure of which is herein incorporated by reference in its entirety.

In some aspects, approximately one mole of maleic anhydride may be reacted per mole of polyalkylene, such that the resulting polyalkenyl succinic anhydride has about 0.8 to about 1 succinic anhydride group per polyalkylene substituent. In other aspects, the molar ratio of succinic anhydride groups to polyalkylene groups may range from about 0.5 to about 3.5, such as from about 1 to about 1.1.

The hydrocarbyl carbonyl compounds may be made using any suitable method. One example of a method for forming a hydrocarbyl carbonyl compound comprises blending a polyolefin and maleic anhydride. The polyolefin and maleic anhydride reactants are heated to temperatures of, for example, about 150 °C to about 250 °C, optionally, with the use of a catalyst, such as chlorine or peroxide. Another exemplary method of making the polyalkylene succinic anhydrides is described in US 4,234,435, which is incorporated herein by reference in its entirety.

In the hydrocarbyl substituted dicarboxylic anhydride derivative, the polyamine reactant may be an alkylene polyamine. For example, the polyamine may be selected from ethylene polyamine, propylene polyamine, butylenes polyamines, and the like. In one approach, the polyamine is an ethylene polyamine that may be selected from ethylene diamine, diethylene triamine, triethylene tetramine, tetraethylene pentamine, pentaethylene hexamine, and N, N'-(iminodi-2,1,ethanediyl) bis-1,3- propanediamine. A particularly useful ethylene polyamine is a compound of the formula H₂N-((CHR₁₂-(CH₂)_{q}-NH)ᵣ-H, wherein R₁₂ is hydrogen, q is 1 and r is 4.

In yet further approaches, the second fuel injector cleaning additive of the synergistic mixture is a compound of Formula II 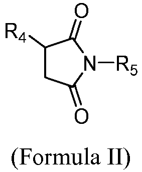 wherein R₄ is a hydrocarbyl group (such as polyisobutylene and/or the other above described R₁₃ moieties) and R₅ is a hydrogen, an alkyl group, an aryl group, -OH, -NHR₆, or a polyamine, or an alkyl group containing one or more primary, secondary, or tertiary amino groups. In some approaches, R₅ is derived from ethylene diamine, diethyelene triamine, triethylene tetraamine, tetraethylene pentamine, pentaethylene hexamine, N,N'-(iminodi-2,1,ethanediyl)bis-1,3-propanediamine and combinations thereof. In yet other approaches R₅ is a compound of Formula VI 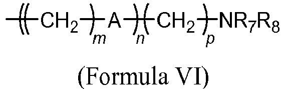 wherein A is NR₆ or an oxygen atom, R₆, R₇, and R₈ are independently a hydrogen atom or an alkyl group, m and p are integers from 2 to 8; and n is an integer from 0 to 4. In some approaches, R₇ and R₈ of Formula VI, together with the nitrogen atom to which they are attached, form a 5 membered ring.

Synergistic Cleaning Mixture: The above-described fuel soluble synergistic cleaning mixture of the first cleaning additive and the second cleaning additive are effective to reduce deposits on fuel injectors and, in particular, clean-up already fouled fuel injectors in gasoline engines operated at fuel pressures, such as non-idle fuel pressures, greater than 500 psi and, in other approaches, from about 500 to about 7,500 psi (in yet further approaches, greater than about 1,000 psi and/or from about 1,000 psi to about 7,500 psi). By clean-up, it is meant the reduction or elimination of existing fuel injector deposits in a gasoline engine when operated at such high pressures. For example, the synergistic detergent mixture is preferably added to the fuel in proportions effective to reduce the amount of injector deposits in a gasoline engine operated on the fuel at about 500 to about 7,500 psi containing the synergistic cleaning mixture to below the amount of injector deposits in the same engine operated in the same manner on the same fuel except that it is devoid of the new synergetic cleaning mixture. Economically, it is desirable to use the least amount of additive effective for the desired purpose. One advantage of the synergistic cleaning mixture herein is that such mixture achieves in some instances injector clean-up at low treat rates, which in some approaches further enables the addition of other additives to the fuel as described more below.

The fuel-soluble synergistic detergent mixture as described in the previous paragraphs is added to the gasoline fuel in amounts up to about 1,000 ppmw of the fuel-soluble synergistic detergent mixture (in other approaches up to about 600 ppmw, in yet other approaches, up to about 400 ppmw, up to about 100 ppmw, up to about 50 ppmw, up to about 15 ppmw, and/or up to about 12 ppmw) having a ratio of the first cleaning additive to the second cleaning additive of 1:8 to 8:1. In other approaches, the fuel-soluble synergistic detergent mixture is provided to the fuel in amounts of about 4 ppmw to about 600 ppmw, in other approaches, about 10 to about 250 ppm, in yet further approaches, about 15 to about 100 ppmw, and in yet even further approaches about 12 to about 20 ppmw (wherein the synergistic mixture includes both the first and second cleaning additives combined).

The fuel composition includes 1.5 to 100 ppmw of the first cleaning additive described herein (in other approaches, about 1.5 to about 60 ppmw), in yet further approaches, about 1.5 to about 20 ppmw, about 15 to about 10 ppmw, about 1.5 to about 5 ppmw) and 3 to 800 ppmw of the second cleaning additive described herein (in other approaches, about 3 to about 400 ppmw, in yet other approaches, about 3 to 100 ppmw, about 3 to about 50 ppmw, about 3 to about 20 ppmw, and/or about 3 to about 1 ppmw, or about 7 to about 20 ppmw) where the ratio of the first to the second cleaning additive remains 1:8 to 8:1 and in other approaches, about 1:2 to about 2:1, and in yet other approaches about 1:2.

When combusting the gasoline fuel having the fuel-soluble synergistic cleaning mixtures within an engine operating at fuel pressures of about 500 to about 7,500 psi, the fuel-soluble synergistic cleaning mixtures herein (as previously described in all prior paragraphs) surprisingly achieve about 30 to about 100 percent clean-up of exiting fuel injector deposits when clean-up is measured by long-term fuel trim (LTFT), injector pulse width, injection duration, and/or injector flow to suggest but a few methods of measuring injector cleanliness. In one approach, fuel injector deposit clean-up is measured per SAE 2013-01-2626 and/or SAE 2017-01-2298 as further discussed below. Both of these papers are incorporated herein by reference in their entirety.

Hydrocarbon Fuel: The base fuels used in formulating the fuel compositions of the present disclosure include any base fuels suitable for use in the operation of gasoline engines configured to combust fuel at the high fuel pressures discussed herein. Suitable fuels include leaded or unleaded motor gasolines, and so-called reformulated gasolines which typically contain both hydrocarbons of the gasoline boiling range and fuel-soluble oxygenated blending agents ("oxygenates"), such as alcohols, ethers and other suitable oxygen-containing organic compounds. Preferably, the fuel is a mixture of hydrocarbons boiling in the gasoline boiling range. This fuel may consist of straight chain or branch chain paraffins, cycloparaffins, olefins, aromatic hydrocarbons or any mixture of these. The gasoline can be derived from straight run naptha, polymer gasoline, natural gasoline or from catalytically reformed stocks boiling in the range from about 80° to about 450 °F. The octane level of the gasoline is not critical and any conventional gasoline may be employed in the practice of this invention.

Oxygenates suitable for use in the present disclosure include methanol, ethanol, isopropanol, t-butanol, mixed C1 to C5 alcohols, methyl tertiary butyl ether, tertiary amyl methyl ether, ethyl tertiary butyl ether and mixed ethers. Oxygenates, when used, will normally be present in the base fuel in an amount below about 30% by volume, and preferably in an amount that provides an oxygen content in the overall fuel in the range of about 0.5 to about 5 percent by volume.

High pressure gasoline engines are engines known to those of ordinary skill that are configured to operate at non-idle gasoline fuel pressures greater than about 500 psi or greater than 1,000 psi and preferably at about 500 to about 7,500 psi (in other approaches, about 1,000 to about 7,500 psi, about 500 to about 4,000 psi, about 1,000 to about 4,000 psi, and in yet further approaches, about 500 to about 3,000 psi, or about 1,000 to about 3,000 psi). The hydrocarbon fuel boiling in the gasoline range may be spark-ignited or compression ignited at such high pressures. Such engines may include individual fuel injectors for each cylinder or combustion chamber of the engine. Suitable gasoline engines may include one or more high pressure pumps and suitable high pressure injectors configured to spray fuel into each cylinder or combustion chamber of the engine at the high pressures. In other approaches, the engines may be operated at temperatures effective to combust the gasoline under high compression and high pressure. Such engines are described, for example, in US patent references US 8,235,024; US 8,701,626; US 9,638,146; US 20070250256; and/or US 20060272616 to suggest a few examples. In some instances, the gasoline engine may also be configured to operate at an air-to-gasoline weight ratio of about 40:1 or higher in the combustion chamber (in some approaches, about 40:1 to about 70:1 air-to-gasoline weight ratio) to deliver fuel at the high pressures noted herein.

Supplemental Fuel Additives: The fuel compositions of the present disclosure may also contain supplemental additives in addition to the fuel-soluble synergistic detergent mixture described above. For example, supplemental additives may include other dispersants/detergents, antioxidants, carrier fluids, metal deactivators, dyes, markers, corrosion inhibitors, biocides, antistatic additives, drag reducing agents, demulsifiers, emulsifiers, dehazers, anti-icing additives, antiknock additives, anti-valve-seat recession additives, lubricity additives, surfactants, combustion improvers, and mixtures thereof.

One particular additional additive may be a Mannich base detergent such as a separate intake valve deposit (IVD) control additive including a Mannich base detergent. Suitable Mannich base detergents for use in the fuel compositions herein include the reaction products of a high molecular weight alkyl-substituted hydroxyaromatic compound, aldehydes and amines. If used, the fuel composition may include about 45 to about 1000 ppm of a Mannich base detergent as a separate IVD control additive.

In one approach, the high molecular weight alkyl substituents on the benzene ring of the hydroxyaromatic compound may be derived from a polyolefin having a number average molecular weight (Mn) from about 500 to about 3000, preferably from about 700 to about 2100, as determined by gel permeation chromatography (GPC) using polystyrene as reference. The polyolefin may also have a polydispersity (weight average molecular weight/number average molecular weight) of about 1 to about 4 (in other instances, about 1 to about 2) as determined by GPC using polystyrene as reference.

The alkylation of the hydroxyaromatic compound is typically performed in the presence of an alkylating catalyst at a temperature in the range of about 0 to about 200 °C, preferably 0 to 100 °C. Acidic catalysts are generally used to promote Friedel-Crafts alkylation. Typical catalysts used in commercial production include sulphuric acid, BF₃, aluminum phenoxide, methanesulphonic acid, cationic exchange resin, acidic clays and modified zeolites.

Polyolefins suitable for forming the high molecular weight alkyl-substituted hydroxyaromatic compounds include polypropylene, polybutenes, polyisobutylene, copolymers of butylene and/or butylene and propylene, copolymers of butylene and/or isobutylene and/or propylene, and one or more mono-olefinic comonomers copolymerizable therewith (e.g., ethylene, 1-pentene, 1-hexene, 1-octene, 1-decene, etc.) where the copolymer molecule contains at least 50% by weight, of butylene and/or isobutylene and/or propylene units. The comonomers polymerized with propylene or such butenes may be aliphatic and can also contain non-aliphatic groups, e.g., styrene, o-methylstyrene, p-methylstyrene, divinyl benzene and the like. Thus in any case the resulting polymers and copolymers used in forming the high molecular weight alkyl-substituted hydroxyaromatic compounds are substantially aliphatic hydrocarbon polymers.

Polybutylene is preferred. Unless otherwise specified herein, the term "polybutylene" is used in a generic sense to include polymers made from "pure" or "substantially pure" 1-butene or isobutene, and polymers made from mixtures of two or all three of 1-butene, 2-butene and isobutene. Commercial grades of such polymers may also contain insignificant amounts of other olefins. So-called high reactivity polyisobutenes having relatively high proportions of polymer molecules having a terminal vinylidene group are also suitable for use in forming the long chain alkylated phenol reactant. Suitable high-reactivity polyisobutenes include those polyisobutenes that comprise at least about 20% of the more reactive methylvinylidene isomer, preferably at least 50% and more preferably at least 70%. Suitable polyisobutenes include those prepared using BF₃ catalysts. The preparation of such polyisobutenes in which the methylvinylidene isomer comprises a high percentage of the total composition is described in US 4,152,499 and US 4,605,808, which are both incorporated herein by reference.

The Mannich detergent may be made from a high molecular weight alkylphenol or alkylcresol. However, other phenolic compounds may be used including high molecular weight alkyl-substituted derivatives of resorcinol, hydroquinone, catechol, hydroxydiphenyl, benzylphenol, phenethylphenol, naphthol, tolylnaphthol, among others. Preferred for the preparation of the Mannich detergents are the polyalkylphenol and polyalkylcresol reactants, e.g., polypropylphenol, polybutylphenol, polypropylcresol and polybutylcresol, wherein the alkyl group has a number average molecular weight of about 500 to about 2100 as measured by GPC using polystyrene as reference, while the most preferred alkyl group is a polybutyl group derived from polyisobutylene having a number average molecular weight in the range of about 700 to about 1300 as measured by GPC using polystyrene as reference.

The preferred configuration of the high molecular weight alkyl-substituted hydroxyaromatic compound is that of a para-substituted mono-alkylphenol or a para-substituted mono-alkyl ortho-cresol. However, any hydroxyaromatic compound readily reactive in the Mannich condensation reaction may be employed. Thus, Mannich products made from hydroxyaromatic compounds having only one ring alkyl substituent, or two or more ring alkyl substituents are suitable for use in this invention. The long chain alkyl substituents may contain some residual unsaturation, but in general, are substantially saturated alkyl groups.

Representative amine reactants include, but are not limited to, alkylene polyamines having at least one suitably reactive primary or secondary amino group in the molecule. Other substituents such as hydroxyl, cyano, amido, etc., can be present in the polyamine. In a preferred embodiment, the alkylene polyamine is a polyethylene polyamine. Suitable alkylene polyamine reactants include ethylenediamine, diethylenetriamine, triethylenetetramine, tetraethylenepentamine and mixtures of such amines having nitrogen contents corresponding to alkylene polyamines of the formula H₂N--(A-NH--)ₙH, where A in this formula is divalent ethylene or propylene and n is an integer of from 1 to 10, preferably 1 to 4. The alkylene polyamines may be obtained by the reaction of ammonia and dihalo alkanes, such as dichloro alkanes.

The amine may also be an aliphatic diamine having one primary or secondary amino group and at least one tertiary amino group in the molecule. Examples of suitable polyamines include N,N,N",N"-tetraalkyldialkylenetriamines (two terminal tertiary amino groups and one central secondary amino group), N,N,N',N"-tetraalkyltrialkylenetetramines (one terminal tertiary amino group, two internal tertiary amino groups and one terminal primary amino group), N,N,N',N",N'''-pentaalkyltrialkylenetetramines (one terminal tertiary amino group, two internal tertiary amino groups and one terminal secondary amino group), N,N-dihydroxyalkyl-alpha-, omega-alkylenediamines (one terminal tertiary amino group and one terminal primary amino group), N,N,N'-trihydroxyalkyl-alpha, omega-alkylenediamines (one terminal tertiary amino group and one terminal secondary amino group), tris(dialkylaminoalkyl)aminoalkylmethanes (three terminal tertiary amino groups and one terminal primary amino group), and similar compounds, wherein the alkyl groups are the same or different and typically contain no more than about 12 carbon atoms each, and which preferably contain from 1 to 4 carbon atoms each. Most preferably these alkyl groups are methyl and/or ethyl groups. Preferred polyamine reactants are N,N-dialkyl-alpha, omega-alkylenediamine, such as those having from 3 to about 6 carbon atoms in the alkylene group and from 1 to about 12 carbon atoms in each of the alkyl groups, which most preferably are the same but which can be different. Most preferred is N,N-dimethyl-1,3-propanediamine and N-methyl piperazine.

Examples of polyamines having one reactive primary or secondary amino group that can participate in the Mannich condensation reaction, and at least one sterically hindered amino group that cannot participate directly in the Mannich condensation reaction to any appreciable extent include N-(*tert*-butyl)-1,3-propanediamine, N-neopentyl-1,3-propanediamine-, N-(*tert-*butyl)-1-methyl-1,2-ethanediamine, N-(tert-butyl)-1-methyl-1,3-p-ropanediamine, and 3,5-di(*tert*-butyl)aminoethylpiperazine.

Representative aldehydes for use in the preparation of the Mannich base products include the aliphatic aldehydes such as formaldehyde, acetaldehyde, propionaldehyde, butyraldehyde, valeraldehyde, caproaldehyde, heptaldehyde, stearaldehyde. Aromatic aldehydes which may be used include benzaldehyde and salicylaldehyde. Illustrative heterocyclic aldehydes for use herein are furfural and thiophene aldehyde, etc. Also useful are formaldehydeproducing reagents such as paraformaldehyde, or aqueous formaldehyde solutions such as formalin. Most preferred is formaldehyde or formalin.

The condensation reaction among the alkylphenol, the specified amine(s) and the aldehyde may be conducted at a temperature typically in the range of about 40 °C to about 200 °C. The reaction can be conducted in bulk (no diluent or solvent) or in a solvent or diluent. Water is evolved and can be removed by azeotropic distillation during the course of the reaction. Typically, the Mannich reaction products are formed by reacting the alkyl-substituted hydroxyaromatic compound, the amine and aldehyde in the molar ratio of 1.0:0.5-2.0:1.0-3.0, respectively.

Suitable Mannich base detergents include those detergents taught in US 4,231,759; US 5,514,190; US 5,634,951; US 5,697,988; US 5,725,612; and 5,876,468, the disclosures of which are incorporated herein by reference.

Another suitable additional fuel additive may be a hydrocarbyl amine detergents. If used, the fuel composition may include about 45 to about 1000 ppm of the hydrocarbyl amine detergent. One common process involves halogenation of a long chain aliphatic hydrocarbon such as a polymer of ethylene, propylene, butylene, isobutene, or copolymers such as ethylene and propylene, butylene and isobutylene, and the like, followed by reaction of the resultant halogenated hydrocarbon with a polyamine. If desired, at least some of the product can be converted into an amine salt by treatment with an appropriate quantity of an acid. The products formed by the halogenation route often contain a small amount of residual halogen such as chlorine. Another way of producing suitable aliphatic polyamines involves controlled oxidation (e.g., with air or a peroxide) of a polyolefin such as polyisobutene followed by reaction of the oxidized polyolefin with a polyamine. For synthesis details for preparing such aliphatic polyamine detergent/dispersants, see for example U.S. Pat. Nos. 3,438,757; 3,454,555; 3,485,601; 3,565,804; 3,573,010; 3,574,576; 3,671,511; 3,746,520; 3,756,793; 3,844,958; 3,852,258; 3,864,098; 3,876,704; 3,884,647; 3,898,056; 3,950,426; 3,960,515; 4,022,589; 4,039,300; 4,128,403; 4,166,726; 4,168,242; 5,034,471; 5,086,115; 5,112,364; and 5,124,484; and published European Patent Application 384,086. The disclosures of each of the foregoing documents are incorporated herein by reference. The long chain substituent(s) of the hydrocarbyl amine detergent most preferably contain(s) an average of 40 to 350 carbon atoms in the form of alkyl or alkenyl groups (with or without a small residual amount of halogen substitution). Alkenyl substituents derived from poly-alpha-olefin homopolymers or copolymers of appropriate molecular weight (e.g., propene homopolymers, butene homopolymers, C3 and C4 alpha-olefin copolymers, and the like) are suitable. Most preferably, the substituent is a polyisobutenyl group formed from polyisobutene having a number average molecular weight (as determined by gel permeation chromatography) in the range of 500 to 2000, preferably 600 to 1800, most preferably 700 to 1600.

Polyetheramines are yet another suitable additional detergent chemistry used in the methods of the present disclosure. If used, the fuel composition may include about 45 to about 1000 ppm of the polyetheramine detergents. The polyether backbone in such detergents can be based on propylene oxide, ethylene oxide, butylene oxide, or mixtures of these. The most preferred are propylene oxide or butylene oxide or mixture thereof to impart good fuel solubility. The polyetheramines can be monoamines, diamines or triamines. Examples of commercially available polyetheramines are those under the tradename Jeffamines™ available from Huntsman Chemical company and the poly(oxyalkylene)carbamates available from Chevron Chemical Company. The molecular weight of the polyetheramines will typically range from 500 to 3000. Other suitable polyetheramines are those compounds taught in U.S. Pat. Nos. 4,191,537; 4,236,020; 4,288,612; 5,089,029; 5,112,364; 5,322,529; 5,514,190 and 5,522,906.

In some approaches, the fuel-soluble synergistic detergent mixture may also be used with a liquid carrier or induction aid. Such carriers can be of various types, such as for example liquid poly-α-olefin oligomers, mineral oils, liquid poly(oxyalkylene) compounds, liquid alcohols or polyols, polyalkenes, liquid esters, and similar liquid carriers. Mixtures of two or more such carriers can be employed.

Exemplary liquid carriers may include a mineral oil or a blend of mineral oils that have a viscosity index of less than about 120; one or more poly-α-olefin oligomers; one or more poly(oxyalkylene) compounds having an average molecular weight in the range of about 500 to about 3000; polyalkenes; polyalkyl-substituted hydroxyaromatic compounds; or mixtures thereof. The mineral oil carrier fluids that can be used include paraffinic, naphthenic and asphaltic oils, and can be derived from various petroleum crude oils and processed in any suitable manner. For example, the mineral oils may be solvent extracted or hydrotreated oils. Reclaimed mineral oils can also be used. Hydrotreated oils are the most preferred. Preferably the mineral oil used has a viscosity at 40 °C of less than about 1600 SUS, and more preferably between about 300 and 1500 SUS at 40 °C. Paraffinic mineral oils most preferably have viscosities at 40 °C in the range of about 475 SUS to about 700 SUS. In some instances, the mineral oil may have a viscosity index of less than about 100, in other instances, less than about 70 and, in yet further instances, in the range of from about 30 to about 60.

The poly-α-olefins (PAO) suitable for use as carrier fluids are the hydrotreated and unhydrotreated poly-α-olefin oligomers, such as, hydrogenated or unhydrogenated products, primarily trimers, tetramers and pentamers of alpha-olefin monomers, which monomers contain from 6 to 12, generally 8 to 12 and most preferably about 10 carbon atoms. Their synthesis is outlined in Hydrocarbon Processing, February 1982, page 75 et seq., and in U.S. Pat. Nos. 3,763,244; 3,780,128; 4,172,855; 4,218,330; and 4,950,822. The usual process essentially comprises catalytic oligomerization of short chain linear alpha olefins (suitably obtained by catalytic treatment of ethylene). The poly-α-olefins used as carriers will usually have a viscosity (measured at 100 °C) in the range of 2 to 20 centistokes (cSt). Preferably, the poly-α-olefin has a viscosity of at least 8 cSt, and most preferably about 10 cSt at 100 °C.

Suitable poly (oxyalkylene) compounds for the carrier fluids may be fuel-soluble compounds which can be represented by the following formula

R_{A}--(R_{B}-O)_{w}--R_{C}

wherein R_{A} is typically a hydrogen, alkoxy, cycloalkoxy, hydroxy, amino, hydrocarbyl (e.g., alkyl, cycloalkyl, aryl, alkylaryl, aralkyl, etc.), amino-substituted hydrocarbyl, or hydroxy-substituted hydrocarbyl group, R_{B} is an alkylene group having 2 to 10 carbon atoms (preferably 2-4 carbon atoms), Rc is typically a hydrogen, alkoxy, cycloalkoxy, hydroxy, amino, hydrocarbyl (e.g., alkyl, cycloalkyl, aryl, alkylaryl, aralkyl, etc.), amino-substituted hydrocarbyl, or hydroxy-substituted hydrocarbyl group, and w is an integer from 1 to 500 and preferably in the range of from 3 to 120 representing the number (usually an average number) of repeating alkyleneoxy groups. In compounds having multiple --R_{B}--O-- groups, R_{B} can be the same or different alkylene group and where different, can be arranged randomly or in blocks. Preferred poly (oxyalkylene) compounds are monools comprised of repeating units formed by reacting an alcohol with one or more alkylene oxides, preferably one alkylene oxide, more preferably propylene oxide or butylene oxide.

The average molecular weight of the poly (oxyalkylene) compounds used as carrier fluids is preferably in the range of from about 500 to about 3000, more preferably from about 750 to about 2500, and most preferably from above about 1000 to about 2000.

One useful sub-group of poly (oxyalkylene) compounds is comprised of the hydrocarbyl-terminated poly(oxyalkylene) monools such as are referred to in the passage at column 6, line 20 to column 7 line 14 of U.S. Pat. No. 4,877,416 and references cited in that passage, said passage and said references being fully incorporated herein by reference.

Another sub-group of poly (oxyalkylene) compounds includes one or a mixture of alkylpoly (oxyalkylene)monools which in its undiluted state is a gasoline-soluble liquid having a viscosity of at least about 70 centistokes (cSt) at 40 °C and at least about 13 cSt at 100 °C. Of these compounds, monools formed by propoxylation of one or a mixture of alkanols having at least about 8 carbon atoms, and more preferably in the range of about 10 to about 18 carbon atoms, are particularly preferred.

The poly (oxyalkylene) carriers may have viscosities in their undiluted state of at least about 60 cSt at 40 °C (in other approaches, at least about 70 cSt at 40 °C) and at least about 11 cSt at 100 °C (more preferably at least about 13 cSt at 100 °C). In addition, the poly (oxyalkylene) compounds used in the practice of this invention preferably have viscosities in their undiluted state of no more than about 400 cSt at 40 °C and no more than about 50 cSt at 100 °C. In other approaches, their viscosities typically do not exceed about 300 cSt at 40 °C and typically do not exceed about 40 cSt at 100 °C.

Preferred poly (oxyalkylene) compounds also include poly (oxyalkylene) glycol compounds and monoether derivatives thereof that satisfy the above viscosity requirements and that are comprised of repeating units formed by reacting an alcohol or polyalcohol with an alkylene oxide, such as propylene oxide and/or butylene oxide with or without use of ethylene oxide, and especially products in which at least 80 mole % of the oxyalkylene groups in the molecule are derived from 1,2-propylene oxide. Details concerning preparation of such poly(oxyalkylene) compounds are referred to, for example, in Kirk-Othmer, Encyclopedia of Chemical Technology, Third Edition, Volume 18, pages 633-645 (Copyright 1982 by John Wiley & Sons), and in references cited therein, the foregoing excerpt of the Kirk-Othmer encyclopedia and the references cited therein being incorporated herein by reference. U.S. Pat. Nos. 2,425,755; 2,425,845; 2,448,664; and 2,457,139 also describe such procedures, and are fully incorporated herein by reference.

The poly (oxyalkylene) compounds, when used, typically will contain a sufficient number of branched oxyalkylene units (e.g., methyldimethyleneoxy units and/or ethyldimethyleneoxy units) to render the poly (oxyalkylene) compound gasoline soluble. Suitable poly (oxyalkylene) compounds include those taught in U.S. Pat. Nos. 5,514,190; 5,634,951; 5,697,988; 5,725,612; 5,814,111 and 5,873,917, the disclosures of which are incorporated herein by reference.

The polyalkenes suitable for use as carrier fluids include polypropene and polybutene. The polyalkenes may have a polydispersity (Mw/Mn) of less than 4. In one embodiment, the polyalkenes have a polydispersity of 1.4 or below. In general, polybutenes have a number average molecular weight (Mn) of about 500 to about 2000, preferably 600 to about 1000, as determined by gel permeation chromatography (GPC). Suitable polyalkenes for use in the present invention are taught in U.S. Pat. No. 6,048,373.

The polyalkyl-substituted hydroxyaromatic compounds suitable for use as carrier fluid include those compounds known in the art as taught in U.S. Pat. Nos. 3,849,085; 4,231,759; 4,238,628; 5,300,701; 5,755,835 and 5,873,917, the disclosures of which are incorporated herein by reference.

### DEFINITIONS

For purposes of this disclosure, the chemical elements are identified in accordance with the Periodic Table of the Elements, CAS version, Handbook of Chemistry and Physics, 75th Ed. Additionally, general principles of organic chemistry are described in "Organic Chemistry", Thomas Sorrell, University Science Books, Sausolito: 1999, and "March's Advanced Organic Chemistry", 5th Ed., Ed.: Smith, M.B. and March, J., John Wiley & Sons, New York: 2001, the entire contents of which are hereby incorporated by reference.

As used herein, the term "major amount" is understood to mean an amount greater than or equal to 50 wt. %, for example from about 80 to about 98 wt. % relative to the total weight of the composition. Moreover, as used herein, the term "minor amount" is understood to mean an amount less than 50 wt. % relative to the total weight of the composition.

As described herein, compounds may optionally be substituted with one or more substituents, such as are illustrated generally above, or as exemplified by particular classes, subclasses, and species of the disclosure.

As used herein, an "alkyl" group refers to a saturated aliphatic hydrocarbon group containing (unless otherwise noted in this disclosure) 1-12 (e.g., 1-8, 1-6, or 1-4) carbon atoms. An alkyl group can be straight or branched. Examples of alkyl groups include, but are not limited to, methyl, ethyl, propyl, isopropyl, butyl, isobutyl, sec-butyl, *tert-butyl, n*-pentyl, *n-*heptyl, or 2-ethylhexyl. An alkyl group can be substituted (i.e., optionally substituted) with one or more substituents such as halo, phospho, cycloaliphatic [e.g., cycloalkyl or cycloalkenyl], heterocycloaliphatic [e.g., heterocycloalkyl or hetero cycloalkenyl], aryl, heteroaryl, alkoxy, aroyl, heteroaroyl, acyl [e.g., (aliphatic)carbonyl, (cycloaliphatic)carbonyl, or (heterocycloaliphatic)carbonyl], nitro, cyano, amido [e.g., (cycloalkylalkyl)carbonylamino, arylcarbonylamino, aralkylcarbonylamino, (heterocyclo alkyl)carbonylamino, (heterocycloalkylalkyl) carbonylamino, heteroarylcarbonylamino, heteroaralkylcarbonylamino alkylaminocarbonyl, cycloalkylaminocarbonyl, heterocyclo alkylaminocarbonyl, arylaminocarbonyl, or heteroarylaminocarbonyl], amino [e.g., aliphaticamino, cycloaliphaticamino, or heterocycloaliphaticamino], sulfonyl [e.g., aliphatic-SO₂-], sulfinyl, sulfanyl, sulfoxy, urea, thiourea, sulfamoyl, sulfamide, oxo, carboxy, carbamoyl, cycloaliphaticoxy, heterocycloaliphaticoxy, aryloxy, heteroaryloxy, aralkyloxy, heteroarylalkoxy, alkoxycarbonyl, alkylcarbonyloxy, or hydroxy. Without limitation, some examples of substituted alkyls include carboxyalkyl (such as HOOC-alkyl, alkoxy carbonylalkyl, and alkylcarbonyloxyalkyl), cyanoalkyl, hydroxyalkyl, alkoxyalkyl, acylalkyl, aralkyl, (alkoxyaryl)alkyl, (sulfonylamino)alkyl (such as (alkyl-SO₂-amino)alkyl), aminoalkyl, amidoalkyl, (cycloaliphatic)alkyl, or haloalkyl.

As used herein, an "alkenyl" group refers to an aliphatic carbon group that contains (unless otherwise noted in this disclosure) 2-8 (e.g., 2-12, 2-6, or 2-4) carbon atoms and at least one double bond. Like an alkyl group, an alkenyl group can be straight or branched. Examples of an alkenyl group include, but are not limited to allyl, isoprenyl, 2-butenyl, and 2-hexenyl. An alkenyl group can be optionally substituted with one or more substituents such as halo, phospho, cycloaliphatic [e.g., cycloalkyl or cycloalkenyl], heterocycloaliphatic [e.g., heterocycloalkyl or hetero cycloalkenyl], aryl, heteroaryl, alkoxy, aroyl, heteroaroyl, acyl [e.g., (aliphatic) carbonyl, (cycloaliphatic)carbonyl, or (heterocycloaliphatic)carbonyl], nitro, cyano, amido [e.g., (cycloalkylalkyl)carbonylamino, arylcarbonylamino, aralkylcarbonylamino, (hetero cycloalkyl) carbonylamino, (heterocyclo alkylalkyl) carbonylamino, heteroarylcarbonylamino, heteroaralkylcarbonylamino alkylaminocarbonyl, cycloalkylaminocarbonyl, hetero cyclo alkylaminocarbonyl, arylaminocarbonyl, or heteroarylaminocarbonyl], amino [e.g., aliphaticamino, cycloaliphaticamino, heterocyclo aliphaticamino, or aliphaticsulfonylamino], sulfonyl [e.g., alkyl-SO₂-, cycloaliphatic-SO₂-, or aryl-SO₂-], sulfinyl, sulfanyl, sulfoxy, urea, thiourea, sulfamoyl, sulfamide, oxo, carboxy, carbamoyl, cycloaliphaticoxy, heterocycloaliphaticoxy, aryloxy, heteroaryloxy, aralkyloxy, heteroaralkoxy, alkoxycarbonyl, alkylcarbonyloxy, or hydroxy. Without limitation, some examples of substituted alkenyls include cyanoalkenyl, alkoxyalkenyl, acylalkenyl, hydroxyalkenyl, aralkenyl, (alkoxyaryl)alkenyl, (sulfonylamino)alkenyl (such as (alkyl-SO₂-amino)alkenyl), aminoalkenyl, amidoalkenyl, (cycloaliphatic)alkenyl, or haloalkenyl.

A hydrocarbyl group refers to a group that has a carbon atom directly attached to a remainder of the molecule and each hydrocarbyl group is independently selected from hydrocarbon substituents, and substituted hydrocarbon substituents may contain one or more of halo groups, hydroxyl groups, alkoxy groups, mercapto groups, nitro groups, nitroso groups, amino groups, sulfoxy groups, pyridyl groups, furyl groups, thienyl groups, imidazolyl groups, sulfur, oxygen and nitrogen, and wherein no more than two non-hydrocarbon substituents are present for every ten carbon atoms in the hydrocarbyl group.

As used herein, fuel-soluble generally means that the substance should be sufficiently soluble (or dissolve) at about 20 °C in the base fuel at least at the minimum concentration required for the substance to serve its intended function. Preferably, the substance will have a substantially greater solubility in the base fuel. However, the substance need not dissolve in the base fuel in all proportions.

The number average molecular weight (Mn) for any approach, aspect, embodiment or Example herein may be determined with a gel permeation chromatography (GPC) instrument obtained from Waters or the like instrument and data as processed with Waters Empower Software or the like software. The GPC instrument may be equipped with a Waters Separations Module and Waters Refractive Index detector (or the like optional equipment). The GPC operating conditions may include a guard column, 4 Agilent PLgel columns (length of 300×7.5 mm; particle size of 5 µ, and pore size ranging from 100-10000 Å) with the column temperature at about 40 °C. Unstabilized HPLC grade tetrahydrofuran (THF) may be used as solvent, at a flow rate of 1.0 mL/min. The GPC instrument may be calibrated with commercially available polystyrene (PS) standards having a narrow molecular weight distribution ranging from 500 - 380,000 g/mol. The calibration curve can be extrapolated for samples having a mass less than 500 g/mol. Samples and PS standards can be in dissolved in THF and prepared at concentration of 0.1-0.5 wt. % and used without filtration. GPC measurements are also described in US 5,266,223, which is incorporated herein by reference. The GPC method additionally provides molecular weight distribution information; *see, for example,* W. W. Yau, J. J. Kirkland and D. D. Bly, "Modern Size Exclusion Liquid Chromatography", John Wiley and Sons, New York, 1979, also incorporated herein by reference.

A better understanding of the present disclosure and its many advantages may be clarified with the following examples. The following examples are illustrative and not limiting thereof in either scope or spirit. Those skilled in the art will readily understand that variations of the components, methods, steps, and devices described in these examples can be used. Unless noted otherwise or apparent from the context of discussion, all percentages, ratios, and parts noted in this disclosure are by weight.

### EXAMPLES

### EXAMPLE 1

Experiments were performed to evaluate the clean-up performance of various fuel additives of the present disclosure when combusted in gasoline engines configured to operate at high fuel pressure. FIG. 1 illustrates the percent clean-up of a gasoline engine injecting a fuel between about 580 to about 1,960 psi with three different fuel injector cleaning additives: about 3.8 ppmw of oleyl dimethyl amino propyl amine betaine, about 7.6 ppmw of a PIBSA-TEPA additive, and an inventive synergistic combination of 3.8 ppmw of the betaine combined with about 7.6 ppmw of the PIBSA-TEPA cleaning additives together (1:2 ratio).

As shown in FIG. 1, while the betaine cleaning additive alone provided a modest level of fuel injector clean-up when combusted in a gasoline engine operated at about 580 to about 1,960 psi fuel injection, the PIBSA-TEPA additive provided no clean-up performance in the high pressure fuel at 7.6 ppmw. However, adding the PIBSA-TEPA in combination with the betaine (2:1 ratio) demonstrated a profound increase in the fuel injector clean-up performance when operating at the high gasoline fuel injection pressures. Given that the PIBSA-TEPA additive had no clean-up performance in the high pressure gasoline engine at 7.6 ppmw, it was not expected that a combination of the PIBSA-TEPA and the betaine would result in an increased clean-up rate relative to the betaine alone. This synergistic combination of the two additives delivered about double the clean-up rate of the betaine alone by 2000 miles of operating the engine at high fuel pressures.

The high pressure gasoline engine testing was evaluated for the additives ability to clean-up fouled injectors in a high pressure fuel injection engine using the procedure set forth in Shanahan, C., Smith, S., and Sears, B., "A General Method for Fouling Injectors in Gasoline Direct Injection Vehicles and the Effects of Deposits on Vehicle Performance," SAE Int. J. Fuels Lubr. 10(3):2017, doi: 10.4271/2017-01-2298, which is incorporated herein by reference in its entirety and discussed further below. While the tests herein utilized a Kia Optima engine, the observations and results are applicable to other vehicle makes, models and other high pressure engines.

The testing involved the use of a fuel blend to accelerate the dirty-up phase or injector fouling of the engine. The accelerated E0 gasoline blend included 409 ppmw of di-*tert*-butyl disulfide (DTBDS, contributing about 147 ppmw active sulfur to the fuel) and 286 ppmw of *tert-*butyl hydrogen peroxide (TBHP). The test involved running a 2013 Kia Optima having a 2.4L, 16 valve, inline 4 gasoline high pressure direct injection engine on a mileage accumulation dynamometer. The engine was run using the "Quad 4" drive cycle as set forth in the above noted SAE paper (SAE 2017-01-2298) and as set forth in Table 1 below. Injector cleanliness was measured using Long Term Fuel Trim (LTFT) as reported by the vehicle engine control unit (ECU) and was measured relative to the accumulated mileage. Results of the testing are shown in FIG. 1. Clean-up percentage is the change of LTFT from the start of test relative to the LTFT at the predetermined mile test points.

**Table 1: Quad 4 Drive Cycle**

| | | | | | | | | | | | | | | | |
|---|---|---|---|---|---|---|---|---|---|---|---|---|---|---|---|
| Time (min) | 0 | 0.5 | 11.75 | 11.95 | 28.35 | 28.55 | 39.5 | 40 | 64.5 | 64.75 | 82.75 | 83 | 99.4 | 100 | 105 |
| Speed (mph) | 0 | 40 | 40 | 55 | 55 | 40 | 40 | 55 | 55 | 25 | 25 | 55 | 55 | 0 | 0 |
| Acceleration (mph/sec) | 1.3 | | 1.3 | | -1.3 | | 0.5 | | -2 | | 2 | | -1.5 | | |
| Steady State Duration (min) | | 11.25 | | 16.4 | | 10.95 | | 24.5 | | 18 | | 16.4 | | 5 | |

It is to be understood that while the fuel additives, compositions, and methods of this disclosure have been described in conjunction with the detailed description thereof and summary herein, the foregoing description is intended to illustrate and not limit the scope of the disclosure, which is defined by the scope of the appended claims. Other aspects, advantages, and modifications are within the scope of the claims. It is intended that the specification and examples be considered as exemplary only, with a true scope of the disclosure being indicated by the following claims.

Other embodiments of the present disclosure will be apparent to those skilled in the art from consideration of the specification and practice of the embodiments disclosed herein. As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification are to be understood as being modified in all instances by the term "about," whether or not the term "about" is present. Accordingly, unless indicated to the contrary, the numerical parameters set forth in the specification are approximations that may vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements.

It is to be understood that each component, compound, substituent or parameter disclosed herein is to be interpreted as being disclosed for use alone or in combination with one or more of each and every other component, compound, substituent or parameter disclosed herein.

It is further understood that each range disclosed herein is to be interpreted as a disclosure of each specific value within the disclosed range that has the same number of significant digits. Thus, for example, a range from 1 to 4 is to be interpreted as an express disclosure of the values 1, 2, 3 and 4 as well as any range of such values. It is also further understood that any range between the endpoint values within a described range is also discussed herein. Thus, a range from 1 to 4 also means a range from 1 to 3, 1 to 2, 2 to 4, 2 to 3, and so forth.

It is further understood that each lower limit of each range disclosed herein is to be interpreted as disclosed in combination with each upper limit of each range and each specific value within each range disclosed herein for the same component, compounds, substituent or parameter. Thus, this disclosure to be interpreted as a disclosure of all ranges derived by combining each lower limit of each range with each upper limit of each range or with each specific value within each range, or by combining each upper limit of each range with each specific value within each range.

Furthermore, specific amounts/values of a component, compound, substituent or parameter disclosed in the description or an example is to be interpreted as a disclosure of either a lower or an upper limit of a range and thus can be combined with any other lower or upper limit of a range or specific amount/value for the same component, compound, substituent or parameter disclosed elsewhere in the application to form a range for that component, compound, substituent or parameter.

## Claims

1. A method of reducing fuel injector deposits in a gasoline engine, the method comprising:
providing a fuel composition at a pressure of 500 to 7,500 psi to a fuel injector of a gasoline engine and combusting the fuel composition in the gasoline engine;
the fuel composition including a major amount of gasoline and a minor amount of a fuel injector cleaning mixture;
the fuel injector cleaning mixture including a first additive of Formula I and a second additive of Formula II 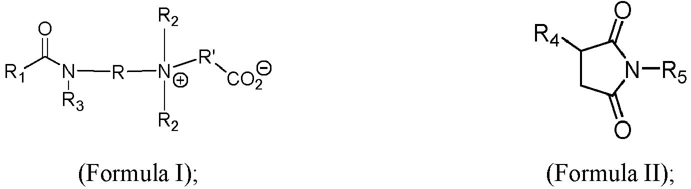 wherein
R and R' are independently alkylene linkers having 1 to 10 carbon atoms;
R₁ is a hydrocarbyl group or optionally substituted hydrocarbyl group, or an aryl group or optionally substituted aryl group;
R₂ is independently a linear or branched C1 to C4 alkyl group;
R₃ is hydrogen or a C1 to C4 alkyl group;
R₄ is a hydrocarbyl group;
R₅ is hydrogen, an alkyl group, an aryl group, -OH, -NHR₆, or a polyamine and wherein R₆ is a hydrogen or an alkyl group;
wherein a ratio of the additive of Formula I to the additive of Formula II is 1:8 to 8:1, and wherein the fuel composition includes 1.5 to 100 ppmw of the additive of Formula I and 3 to 800 ppmw of the additive of Formula II.

2. The method of reducing fuel injector deposits in a gasoline engine according to claim 1, wherein the fuel composition includes no more than about 600 ppmw of the fuel injector cleaning mixture.

3. The method of reducing fuel injector deposits in a gasoline engine according to claim 1 or 2, wherein the fuel composition further includes 45 to 1000 ppmw of a separate intake valve deposit (IVD) control additive selected from a Mannich detergent, polyetheramine detergent, hydrocarbyl amine detergent, and combinations thereof, in particular wherein the fuel composition further includes at least one additive selected from the group consisting of antioxidants, carrier fluids, metal deactivators, dyes, markers, corrosion inhibitors, biocides, antistatic additives, drag reducing agents, demulsifiers, emulsifiers, dehazers, anti-icing additives, antiknock additives, anti-valve-seat recession additives, lubricity additives, surfactants and combustion improvers.

4. The method of reducing fuel injector deposits in a gasoline engine according to any one of claims 1 to 3, wherein the fuel injector cleaning mixture achieves 30 to 100 percent clean-up of fuel injector deposits in the gasoline engine when supplied at pressures of 1,000 psi to 7,500 psi and when the clean-up of injector deposits is measured by at least one of long-term fuel trim, injector pulse width, injection duration, injector flow, and combinations thereof..

5. The method of reducing fuel injector deposits in a gasoline engine according to any one of claims 1 to 4, wherein R and R' are independently alkylene linkers having 1 to 3 carbon atoms and R₁ is a C8 to C20 hydrocarbyl group,
preferably wherein R' includes a methylene linker.

6. The method of reducing fuel injector deposits in a gasoline engine according to claim 5, wherein R₂ is a methyl group.

7. The method of reducing fuel injector deposits in a gasoline engine according to any one of claims 1 to 6, wherein the additive of Formula II includes a hydrocarbyl substituted succinimide derived from ethylene diamine, diethyelene triamine, triethylene tetraamine, tetraethylene pentamine, pentaethylene hexamine, N,N'-(iminodi-2,1,ethanediyl)bis-1,3-propanediamine and combinations thereof.

8. The method of reducing fuel injector deposits in a gasoline engine according to claim 7, wherein R₄ in the compound of Formula II is a hydrocarbyl group having a number average molecular weight from 450 to 3000 and R₅ is derived from tetraethylene pentamine and derivatives thereof.

9. The method of reducing fuel injector deposits in a gasoline engine according to any one of claims 1 to 8, wherein the fuel composition is provided at a pressure of 500 to 4,000 psi.

10. The method of reducing fuel injector deposits in a gasoline engine according to any one of claims 1 to 9, wherein R₁ is oleyl derived and wherein R₅ is derived from ethylene diamine, diethyelene triamine, triethylene tetraamine, tetraethylene pentamine, pentaethylene hexamine, N-N'-(iminodi-2,1,ethanediyl)bis-1,3-propanediamine, and combinations thereof..

11. The method of reducing fuel injector deposits in a gasoline engine according to any one of claims 1 to 10, wherein R and R' are independently alkylene linkers having 1 to 3 carbon atoms, R₁ is a C8 to C20 hydrocarbyl group, and wherein R₄ in the compound of Formula II is a hydrocarbyl group having a number average molecular weight from 450 to 3000 and R₅ is derived from ethylene diamine, diethyelene triamine, triethylene tetraamine, tetraethylene pentamine, pentaethylene hexamine, N-N'-(iminodi-2,1,ethanediyl)bis-1,3-propanediamine, and combinations thereof.

12. The method of reducing fuel injector deposits in a gasoline engine according to claim 11, wherein R' is a methylene linker.

13. The method of reducing fuel injector deposits in a gasoline engine according to claim 11 or 12, wherein R₂ is a methyl group.

## Patentansprüche

1. Verfahren zum Reduzieren von Kraftstoffeinspritzvorrichtungsablagerungen in einem Benzinmotor, wobei das Verfahren Folgendes umfasst:
Bereitstellen einer Kraftstoffzusammensetzung bei einem Druck von 500 bis 7.500 psi für eine Kraftstoffeinspritzvorrichtung eines Benzinmotors und Verbrennen der Kraftstoffzusammensetzung in dem Benzinmotor;
wobei die Kraftstoffzusammensetzung eine größere Menge Benzin und eine kleinere Menge einer Kraftstoffeinspritzvorrichtungsreinigungsmischung einschließt;
wobei die Kraftstoffeinspritzvorrichtungsreinigungsmischung ein erstes Additiv der Formel I und ein zweites Additiv der Formel II einschließt 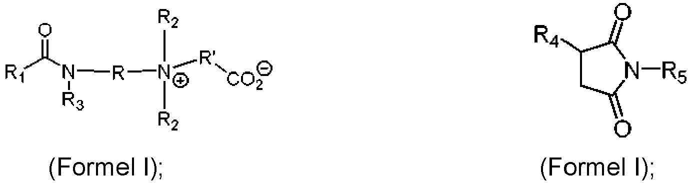 worin
R und R' unabhängig Alkylenlinker mit 1 bis 10 Kohlenstoffatomen sind;
R₁ eine Hydrocarbylgruppe oder wahlweise substituierte Hydrocarbylgruppe oder eine Arylgruppe oder wahlweise substituierte Arylgruppe ist;
R₂ unabhängig eine lineare oder verzweigte C1- bis C4-Alkylgruppe ist;
R₃ Wasserstoff oder eine C1- bis C4-Alkylgruppe ist;
R₄ eine Hydrocarbylgruppe ist;
R₅ Wasserstoff, eine Alkylgruppe, eine Arylgruppe, -OH, -NHR₆ oder ein Polyamin ist und wobei R₆ ein Wasserstoff oder eine Alkylgruppe ist;
wobei ein Verhältnis des Additivs der Formel I zu dem Additiv der Formel II 1:8 bis 8:1 beträgt und wobei die Kraftstoffzusammensetzung 1,5 bis 100 ppmw des Additivs der Formel I und 3 bis 800 ppmw des Additivs der Formel II enthält.

2. Verfahren zum Reduzieren von Kraftstoffeinspritzvorrichtungsablagerungen in einem Benzinmotor nach Anspruch 1, wobei die Kraftstoffzusammensetzung nicht mehr als etwa 600 ppmw der Kraftstoffeinspritzvorrichtungsreinigungsmischung enthält.

3. Verfahren zum Reduzieren von Kraftstoffeinspritzvorrichtungsablagerungen in einem Benzinmotor nach Anspruch 1 oder 2, wobei die Kraftstoffzusammensetzung ferner 45 bis 1000 ppmw eines separaten Einlassventilablagerungssteueradditivs (IVD-Steueradditivs) enthält, ausgewählt aus einem Mannich-Detergens, Polyetheramindetergens, Hydrocarbylamindetergens und Kombinationen davon, wobei die Kraftstoffzusammensetzung insbesondere ferner mindestens ein Additiv enthält, ausgewählt aus der Gruppe bestehend aus Antioxidantien, Trägerfluiden, Metalldesaktivatoren, Farbstoffen, Markern, Korrosionsinhibitoren, Bioziden, Antistatikadditiven, Strömungsbeschleunigern, Demulgatoren, Emulgatoren, Entneblern, Vereisungsschutzadditiven, Klopfschutzadditiven, Ventilsitzschutzadditiven, Schmierfähigkeitsadditiven, Tensiden und Verbrennungsverbesserern.

4. Verfahren zum Reduzieren von Kraftstoffeinspritzvorrichtungsablagerungen in einem Benzinmotor nach einem der Ansprüche 1 bis 3, wobei die Kraftstoffeinspritzvorrichtungsreinigungsmischung 30 bis 100 Prozent Reinigung von Kraftstoffeinspritzvorrichtungsablagerungen in dem Benzinmotor erreicht, wenn sie bei Drücken von 1.000 psi bis 7.500 psi zugeführt wird und wenn die Reinigung von Einspritzvorrichtungsablagerungen durch mindestens eines von langfristiger Kraftstoffkorrektur, Einspritzvorrichtungsimpulsbreite, Einspritzdauer, Einspritzvorrichtungsdurchfluss und Kombinationen davon gemessen wird.

5. Verfahren zum Reduzieren von Kraftstoffeinspritzvorrichtungsablagerungen in einem Benzinmotor nach einem der Ansprüche 1 bis 4, wobei R und R' unabhängig voneinander Alkylenlinker mit 1 bis 3 Kohlenstoffatomen sind und R₁ eine C8- bis C20-Hydrocarbylgruppe ist,
wobei R' vorzugsweise einen Methylenlinker einschließt.

6. Verfahren zum Reduzieren von Kraftstoffeinspritzvorrichtungsablagerungen in einem Benzinmotor nach Anspruch 5, wobei R₂ eine Methylgruppe ist.

7. Verfahren zum Reduzieren von Kraftstoffeinspritzvorrichtungsablagerungen in einem Benzinmotor nach einem der Ansprüche 1 bis 6, wobei das Additiv der Formel II ein hydrocarbylsubstituiertes Succinimid enthält, das von Ethylendiamin, Diethylentriamin, Triethylentetraamin, Tetraethylenpentamin, Pentaethylenhexamin, N,N'-(Iminodi-2,1-ethandiyl)bis-1,3-propandiamin und Kombinationen davon abgeleitet ist.

8. Verfahren zum Reduzieren von Kraftstoffeinspritzvorrichtungsablagerungen in einem Benzinmotor nach Anspruch 7, wobei R₄ in der Verbindung der Formel II eine Hydrocarbylgruppe mit einem Molekulargewicht-Zahlenmittel von 450 bis 3000 ist und R₅ von Tetraethylenpentamin und Derivaten davon abgeleitet ist.

9. Verfahren zum Reduzieren von Kraftstoffeinspritzvorrichtungsablagerungen in einem Benzinmotor nach einem der Ansprüche 1 bis 8, wobei die Kraftstoffzusammensetzung bei einem Druck von 500 bis 4000 psi bereitgestellt wird.

10. Verfahren zum Reduzieren von Kraftstoffeinspritzvorrichtungsablagerungen in einem Benzinmotor nach einem der Ansprüche 1 bis 9, wobei R₁ von Oleyl abgeleitet ist und wobei R₅ von Ethylendiamin, Diethylentriamin, Triethylentetraamin, Tetraethylenpentamin, Pentaethylenhexamin, N-N'-(Iminodi-2,1-ethandiyl)bis-1,3-propandiamin und Kombinationen davon abgeleitet ist.

11. Verfahren zum Reduzieren von Kraftstoffeinspritzvorrichtungsablagerungen in einem Benzinmotor nach einem der Ansprüche 1 bis 10, wobei R und R' unabhängig voneinander Alkylenlinker mit 1 bis 3 Kohlenstoffatomen sind, R₁ eine C8- bis C20-Hydrocarbylgruppe ist und wobei R₄ in der Verbindung der Formel II eine Hydrocarbylgruppe mit einem Molekulargewicht-Zahlenmittel von 450 bis 3000 ist und R₅ von Ethylendiamin, Diethylentriamin, Triethylentetraamin, Tetraethylenpentamin, Pentaethylenhexamin, N-N'-(Iminodi-2,1-ethandiyl)bis-1,3-propandiamin und Kombinationen davon abgeleitet ist.

12. Verfahren zum Reduzieren von Kraftstoffeinspritzvorrichtungsablagerungen in einem Benzinmotor nach Anspruch 11, wobei R' ein Methylenlinker ist.

13. Verfahren zum Reduzieren von Kraftstoffeinspritzvorrichtungsablagerungen in einem Benzinmotor nach Anspruch 11 oder 12, wobei R₂ eine Methylgruppe ist.

## Revendications

1. Procédé de réduction de dépôts d'injecteur de carburant dans un moteur à essence, le procédé comprenant :
la fourniture d'une composition de carburant à une pression de 500 à 7500 psi à un injecteur de carburant d'un moteur à essence et la combustion de la composition de carburant dans le moteur à essence ;
la composition de carburant incluant une quantité majeure d'essence et une quantité mineure d'un mélange de nettoyage d'injecteur de carburant ;
le mélange de nettoyage d'injecteur de carburant incluant un premier additif de Formule I et un deuxième additif de Formule II 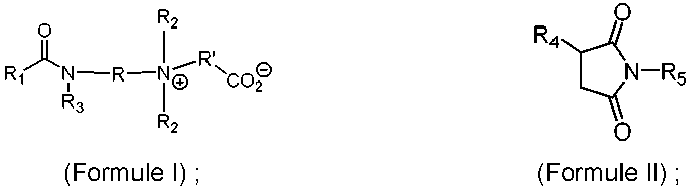 dans lequel
R et R' sont indépendamment des lieurs alkylène ayant 1 à 10 atomes de carbone ;
R₁ est un groupe hydrocarbyle ou groupe hydrocarbyle facultativement substitué, ou un groupe aryle ou groupe aryle facultativement substitué ;
R₂ est indépendamment un groupe alkyle en C1 à C4 linéaire ou ramifié ;
R₃ est hydrogène ou un groupe alkyle en C1 à C4 ;
R₄ est un groupe hydrocarbyle ;
R₅ est hydrogène, un groupe alkyle, un groupe aryle, -OH, -NHR₆, ou une polyamine et dans lequel R₆ est un hydrogène ou un groupe alkyle ;
dans lequel un rapport de l'additif de Formule I à l'additif de Formule II va de 1:8 à 8:1, et dans lequel la composition de carburant inclut 1,5 à 100 ppm en poids de l'additif de Formule I et 3 à 800 ppm en poids de l'additif de Formule II.

2. Procédé de réduction de dépôts d'injecteur de carburant dans un moteur à essence selon la revendication 1, dans lequel la composition de carburant n'inclut pas plus d'environ 600 ppm en poids du mélange de nettoyage d'injecteur de carburant.

3. Procédé de réduction de dépôts d'injecteur de carburant dans un moteur à essence selon la revendication 1 ou 2, dans lequel la composition de carburant inclut en outre 45 à 1000 ppm en poids d'un additif indépendant de contrôle des dépôts de soupape d'admission (IVD) choisi parmi un détergent de Mannich, un détergent polyétheramine, un détergent hydrocarbylamine, et des combinaisons de ceux-ci, en particulier dans lequel la composition de carburant inclut en outre au moins un additif choisi dans le groupe constitué d'antioxydants, fluides véhicules, désactivateurs de métaux, colorants, marqueurs, inhibiteurs de corrosion, biocides, additifs antistatiques, agents réducteurs de résistance de frottement, agents désémulsifiants, émulsifiants, désagrégateurs, additifs antigivrage, additifs antidétonants, additifs anti-récession de siège de soupape, additifs de pouvoir lubrifiant, agents tensioactifs et agents améliorant la combustion.

4. Procédé de réduction de dépôts d'injecteur de carburant dans un moteur à essence selon l'une quelconque des revendications 1 à 3, dans lequel le mélange de nettoyage d'injecteur de carburant réalise 30 à 100 pour cent de nettoyage des dépôts d'injecteur de carburant dans le moteur à essence lorsqu'il est alimenté à des pressions de 1000 psi à 7500 psi et lorsque le nettoyage des dépôts d'injecteur est mesuré par au moins l'un parmi une correction de carburant à long terme, une largeur d'impulsion d'injecteur, une durée d'injection, un débit d'injecteur, et des combinaisons de ceux-ci.

5. Procédé de réduction de dépôts d'injecteur de carburant dans un moteur à essence selon l'une quelconque des revendications 1 à 4, dans lequel R et R' sont indépendamment des lieurs alkylène ayant 1 à 3 atomes de carbone et R₁ est un groupe hydrocarbyle en C8 à C20,
de préférence dans lequel R' inclut un lieur méthylène.

6. Procédé de réduction de dépôts d'injecteur de carburant dans un moteur à essence selon la revendication 5, dans lequel R₂ est un groupe méthyle.

7. Procédé de réduction de dépôts d'injecteur de carburant dans un moteur à essence selon l'une quelconque des revendications 1 à 6, dans lequel l'additif de Formule II inclut un succinimide à substitution hydrocarbyle dérivé d'éthylène-diamine, de diéthylène-triamine, de triéthylène-tétramine, de tétraéthylène-pentamine, de pentaéthylène-hexamine, de N,N'-(iminodi-2,1,éthane-di-yl)bis-1,3-propanediamine et de combinaisons de celles-ci.

8. Procédé de réduction de dépôts d'injecteur de carburant dans un moteur à essence selon la revendication 7, dans lequel R₄ dans le composé de Formule II est un groupe hydrocarbyle ayant une masse moléculaire moyenne en nombre allant de 450 à 3000 et R₅ est dérivé de tétraéthylène-pentamine et de dérivés de celle-ci.

9. Procédé de réduction de dépôts d'injecteur de carburant dans un moteur à essence selon l'une quelconque des revendications 1 à 8, dans lequel la composition de carburant est fournie à une pression de 500 à 4000 psi.

10. Procédé de réduction de dépôts d'injecteur de carburant dans un moteur à essence selon l'une quelconque des revendications 1 à 9, dans lequel R₁ est dérivé d'oléyle et dans lequel R₅ est dérivé d'éthylène-diamine, de diéthylène-triamine, de triéthylène-tétramine, de tétraéthylène-pentamine, de pentaéthylène-hexamine, de N-N'-(iminodi-2,1,éthane-di-yl)bis-1,3-propanediamine, et de combinaisons de celles-ci.

11. Procédé de réduction de dépôts d'injecteur de carburant dans un moteur à essence selon l'une quelconque des revendications 1 à 10, dans lequel R et R' sont indépendamment des lieurs alkylène ayant 1 à 3 atomes de carbone, R₁ est un groupe hydrocarbyle en C8 à C20, et dans lequel R₄ dans le composé de formule II est un groupe hydrocarbyle ayant une masse moléculaire moyenne en nombre allant de 450 à 3000 et R₅ est dérivé d'éthylène-diamine, de diéthylène-triamine, de triéthylène-tétramine, de tétraéthylène-pentamine, de pentaéthylène-hexamine, de N-N'-(iminodi-2,1,éthane-di-yl)bis-1,3-propanediamine, et de combinaisons de celles-ci.

12. Procédé de réduction de dépôts d'injecteur de carburant dans un moteur à essence selon la revendication 11, dans lequel R' est un lieur méthylène.

13. Procédé de réduction de dépôts d'injecteur de carburant dans un moteur à essence selon la revendication 11 ou 12, dans lequel R₂ est un groupe méthyle.
